# DEMANDE DE BREVET EUROPEEN

(11) **EP 0 709 613 A1**
(43) Date de publication de la demande: **01.05.1996**
(21) Numéro de dépôt: 95402390.9
(22) Date de dépôt: 25.10.1995
(51) Int. Cl.: F16L 37/084, F16L 37/20

(54) **Dispositif de raccordement fluidique**

(30) Priorité: 27.10.1994 FR 9412864
(71) Demandeur: ETUDES ET REALISATIONS D' APPAREILLAGES POUR LE FLUIDE SARL, F-64240 Urt (FR); TAEMA, F-92160 Antony (FR)
(72) Inventeur: Mireux, Didier, F-78510 Triel-sur-Seine (FR); Bleys, Christian, F-77000 Livry-sur-Seine (FR)
(74) Mandataire: CABINET BONNET-THIRION

(57) **Abrégé**

Selon l'invention, le raccordement normalement contrôlé par la manoeuvre d'un levier (22) agissant sur un manchon de commande (20) est confirmé dès l'introduction du gaz sous pression par l'établissement d'une pression dans une chambre de pression (80), ladite pression maintenant le manchon (19) en position avancée.

## Description

L'invention se rapporte à un dispositif de raccordement fluidique rapide susceptible d'être accouplé sans vissage à un embout comprenant un orifice formant siège et un élément d'ancrage coaxial tel que par exemple un filetage.

L'invention concerne plus particulièrement un tel dispositif de raccordement destiné à être utilisé pour charger une bouteille de gaz comprimé, par exemple une bouteille d'oxygène comprimé à usage médical.

Dans ce domaine médical, il est préférable que la recharge des bouteilles d'oxygène ne puisse être effectuée que par un personnel compétent et dûment autorisé, ceci pour des raisons de sécurité et de responsabilité.

Pour ces bouteilles on a donc développé un type de robinet détendeur spécialement adapté pour le milieu médical et comprenant notamment un embout de raccordement pour l'utilisation et un autre embout, spécifique, spécialement conçu pour la recharge. Dans un tel système, l'embout utilisable pour la recharge comprend un orifice conformé en siège et un élément d'ancrage coaxial à cet orifice, généralement constitué d'un filetage dont le premier filet ne débouche pas pour interdire le branchement d'un dispositif de raccordement fluidique quelconque. De ce fait, un tel embout spécifique ne peut être connecté qu'à un dispositif de raccordement muni d'une pince de verrouillage spéciale, par exemple constituée de plusieurs éléments répartis circonférentiellement et articulés pour pivoter sensiblement radialement, chaque élément comportant une portion de filetage susceptible de venir en prise avec l'élément d'ancrage coaxial défini ci-dessus, sans vissage, par simple basculement des éléments de la pince de verrouillage. Dans ces conditions, le raccordement se fait quasi-instantanément et en toute sécurité puisque le dispositif de raccordement fluidique est spécifique et uniquement détenu par un opérateur compétent.

Dans un dispositif de raccordement fluidique de ce type, la manoeuvre de raccordement qui commande notamment l'actionnement de la pince de verrouillage s'opère manuellement par le basculement d'un levier. Ce dispositif de raccordement connu comporte en outre un verrou mécanique à actionnement pneumatique qui se déplace radialement dans le corps du dispositif et qui immobilise les éléments tant que la pression du gaz s'exerce sur le verrou à actionnement pneumatique. Cependant, ce verrou risque d'être endommagé par une fausse manoeuvre sur le levier, ce qui risque de rendre le dispositif de raccordement inutilisable, voire indémontable, dans le cas d'une déformation importante dudit verrou.

L'invention propose un dispositif de raccordement fluidique équipé d'un système de verrouillage de confirmation (c'est-à-dire par la pression du gaz lui-même) comparable à celui du dispositif connu mais ne présentant pas le risque d'être endommagé par une fausse manoeuvre du levier.

Plus précisément, l'invention concerne donc un dispositif de raccordement fluidique rapide destiné à être accouplé à un embout comprenant un orifice formant siège et un élément d'ancrage coaxial, par exemple un filetage, du type comportant un corps à l'intérieur duquel est ménagé, selon un axe, un palier tubulaire fixe, un manchon de commande coulissant extérieurement sur ce palier à l'intérieur dudit corps, un levier de manoeuvre articulé audit corps et couplé audit manchon pour le déplacer axialement vers l'embout, un tube de raccordement monté coulissant axialement de façon étanche dans une portion d'extrémité dudit palier, faisant saillie axialement dudit corps et terminé par une tête de raccordement conformée pour s'appliquer de façon étanche sur ledit siège, ledit tube et ledit palier tubulaire définissant un élément de conduit axial pour un fluide sous pression, une pince de verrouillage à structure coaxiale conformée pour coopérer avec un élément d'ancrage précité et un premier moyen élastique sollicitant ledit tube axialement vers l'extérieur dudit corps, caractérisé en ce que ledit manchon est élastiquement sollicité axialement en sens opposé dudit tube par un second moyen élastique développant une force supérieure à celle dudit premier moyen élastique, en ce qu'il comporte en outre une butée de retenue coopérant avec un épaulement extérieur dudit tube de raccordement pour s'opposer à son déplacement vers l'extérieur dudit corps et en ce qu'une chambre de pression annulaire, en communication avec ledit élément de conduit, est définie entre ledit palier fixe et ledit manchon et comporte un épaulement sur lequel la pression dudit fluide est susceptible de s'exercer pour solliciter ledit manchon à l'encontre dudit second moyen élastique.

Comme mentionné précédemment, la pince de verrouillage à structure coaxiale, dans le cas où l'élément d'ancrage de l'embout de bouteille comporte un filetage à extrémité fermée, est constituée de plusieurs éléments répartis circonférentiellement et articulés audit corps pour pivoter sensiblement radialement tout autour de l'extrémité extérieure du tube de raccordement. Chaque élément comporte une portion de filetage. Dans le cas où le filetage de l'embout est intérieur, chaque élément peut comporter une dent intérieure en contact avec la paroi extérieure du tube de raccordement et ces dents sont susceptibles de s'engager ensemble dans une gorge du tube de raccordement pour une position rétractée de celui-ci. Dans cette position, l'ensemble des éléments de la pince à l'état rétracté, peut être engagé dans le filetage de l'embout, puis le mouvement axial du tube de raccordement provoque le pivotement des éléments de la pince, radialement vers l'extérieur, lorsque lesdites dents se dégagent de la gorge dudit tube de raccordement. Inversement, pour le cas d'un embout muni d'un filetage extérieur, chaque élément de la pince comporte une portion de filetage intérieur et une dent extérieure. Lesdits éléments sont sollicités élastiquement ensemble de façon que lesdites dents extérieures soient en contact avec une portion d'extrémité d'un manchon extérieur solidaire en translation dudit manchon de commande. De ce fait, l'actionnement du manchon de commande par le basculement du levier provoque un basculement, radialement vers l'intérieur, des éléments de la pince et ceux-ci viennent en prise avec le filetage extérieur de l'embout de recharge.

Quel que soit le type de pince de verrouillage, il est clair que l'agencement défini ci-dessus élimine tout verrou à action radiale, mobile dans ledit corps. Une fois le raccordement effectué par basculement du levier, et dès que le gaz (l'oxygène) est introduit sous pression, le raccordement est confirmé par action de la pression sur l'épaulement de la chambre de pression. A partir de ce moment, même si on manoeuvre le levier par erreur, le raccordement fluidique est maintenu tant que la pression de gaz est supérieure à une valeur de seuil prédéterminée fixée par le choix des deux ressorts.

L'invention sera mieux comprise et d'autres avantages de celle-ci apparaîtront plus clairement à la lumière de la description qui va suivre de plusieurs modes de réalisation d'un dispositif de raccordement fluidique rapide conforme à son principe, donnée uniquement à titre d'exemple et faite en référence aux dessins annexés dans lesquels:
- la figure 1 est une vue schématique en coupe illustrant un dispositif de raccordement selon l'invention, juste avant son accouplement à un embout spécifique;
- la figure 2 représente le même dispositif de raccordement après sa connexion audit embout spécifique; et
- la figure 3 illustre une variante se différenciant principalement par la structure de la pince de verrouillage.

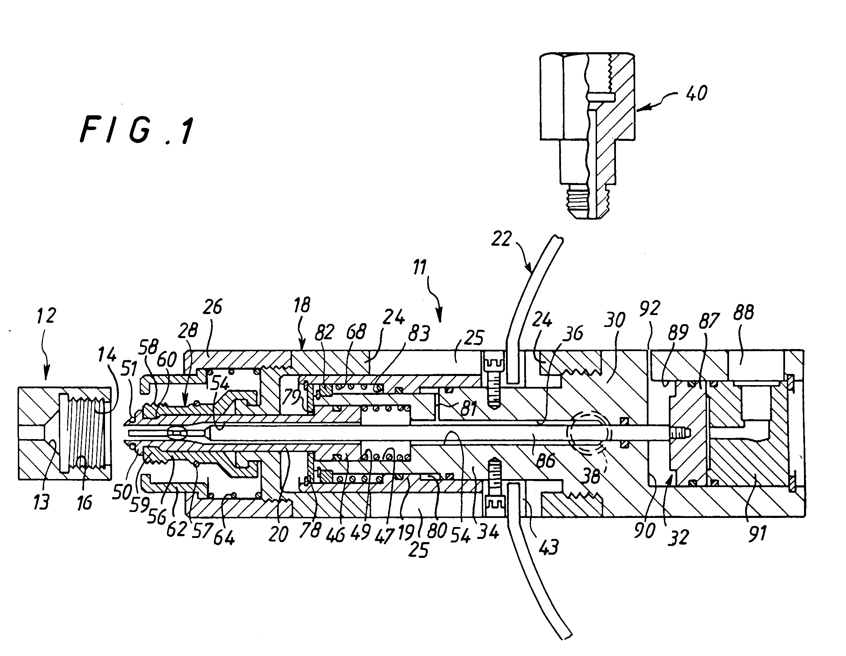

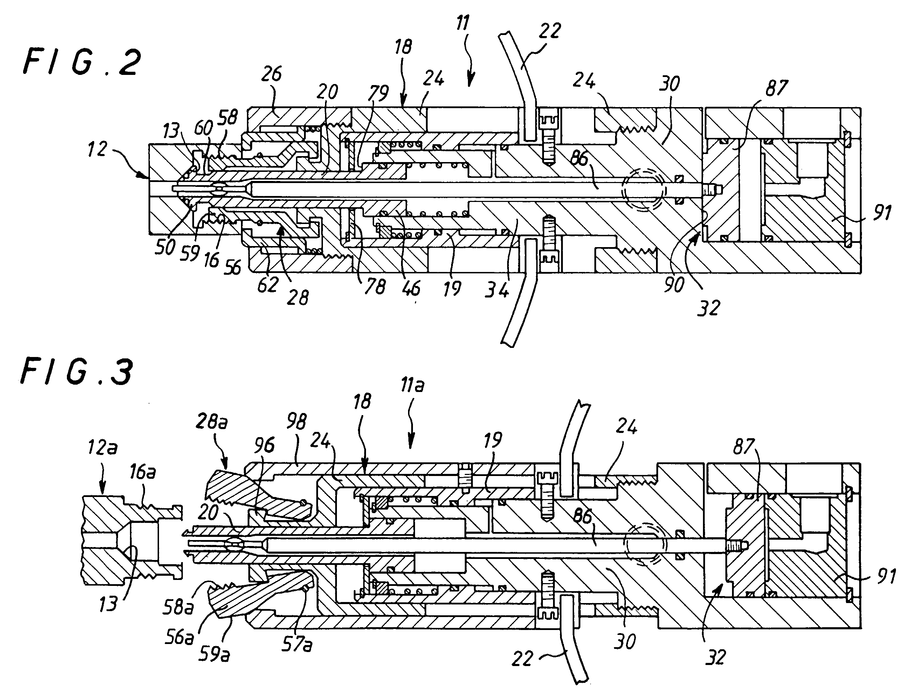

En se référant plus particulièrement aux figures 1 et 2, on a représenté un dispositif de raccordement fluidique rapide 11 destiné à être accouplé à un embout spécifique 12 comprenant un orifice 13 formant siège conique établi au fond d'une cavité cylindrique 14 abritant un élément d'ancrage coaxial, en l'occurrence ici un filetage intérieur 16 dont le premier filet ne débouche pas. Un tel embout équipe classiquement une bouteille d'oxygène comprimé, il est destiné exclusivement à la recharge de cette dernière. Il comporte aussi une valve formant clapet anti-retour, non représentée.

Le dispositif de raccordement 11 comporte un corps 18, globalement cylindrique, un manchon de commande 19 monté coulissant axialement dans ce corps, un tube de raccordement 20 également monté coulissant axialement dans le corps et faisant saillie à une extrémité de celui-ci et un levier de manoeuvre 22, articulé audit corps transversalement à celui-ci et couplé au manchon de commande 19 pour le déplacer axialement dans la direction de l'embout 12. Plus précisément, le corps 18 se compose principalement de trois éléments assemblés coaxialement par des portions filetées. On distingue un élément central 24 muni de deux lumières longitudinales 25 dans lesquelles s'articulent les excentriques du levier, un élément avant 26, tubulaire, prolongeant l'élément central du côté de l'extrémité saillante du tube de raccordement 20 et abritant une pince de verrouillage 28 à structure coaxiale et un élément arrière 30, vissé à l'arrière de l'élément central 24 et dans lequel sont définis un vérin à actionnement pneumatique 32 et un palier tubulaire 34, fixe, s'étendant axialement dans une cavité de l'élément central. Ce palier tubulaire fixe comporte un perçage axial 36 dans lequel débouche un alésage radial 38. Un embout mâle 40 est engagé de façon étanche dans l'alésage 38 permettant le branchement d'un conduit, non représenté, relié à une source d'oxygène sous pression. Par conséquent, l'oxygène sous pression est injecté dans le canal axial 36 dudit palier tubulaire fixe. Le manchon de commande 19 est monté coulissant extérieurement sur ce palier 34, à l'intérieur du corps 18. Le levier de manoeuvre 22 est couplé au manchon par des cames 43 qui sont en contact avec l'extrémité arrière dudit manchon. Le levier 22 a la forme d'un grand anneau qui peut ainsi être engagé, en position d'utilisation, autour de la tête de la bouteille à recharger. Le basculement du levier 22 entraîne le déplacement du manchon 19 vers l'avant, c'est-à-dire dans la direction de l'embout de bouteille auquel le dispositif de raccordement doit être connecté. Le tube de raccordement 20 est monté coulissant axialement de façon étanche dans la portion d'extrémité avant du palier fixe 19. Plus précisément, le tube de raccordement comporte une partie cylindrique de grand diamètre 46 qui coulisse dans une partie cylindrique élargie 47 du perçage axial dudit palier fixe. Un premier moyen élastique, sous forme d'un ressort hélicoïdal 49, est logé dans la partie élargie 47 du perçage axial du palier fixe et se trouve donc comprimé entre ce dernier et l'extrémité correspondante du tube de raccordement. L'extrémité opposée de ce dernier, faisant saillie axialement du corps, présente une tête de raccordement 50 conformée pour s'appliquer de façon étanche sur le siège 13 de l'embout. Plus précisément, cette tête de raccordement 50 est de forme conique et est munie d'un joint d'étanchéité annulaire 51. Le tube de raccordement et le palier tubulaire fixe définissent ensemble et dans le prolongement l'un de l'autre, un élément de conduit axial 54 pour le fluide sous pression, qui s'étend entre le perçage radial 38 et la tête de raccordement 50.

Dans l'exemple des figures 1 et 2, la pince de verrouillage 28 à structure coaxiale est conformée pour le raccordement à un embout muni d'un filetage intérieur. Elle est constituée de plusieurs éléments 56 répartis circonférentiellement et articulés à l'extrémité avant de la partie centrale 24 dudit corps 18 pour pivoter sensiblement radialement autour de l'extrémité du tube de raccordement 20. Un anneau élastique 57 maintient les éléments en contact avec la surface extérieure du tube de raccordement. Chaque élément comporte une portion de filetage extérieur 58 et une dent intérieure 59 qui reste toujours en contact avec la paroi extérieure du tube de raccordement. Les dents sont susceptibles de s'engager ensemble dans une gorge 60 du tube de raccordement 20 lorsque celui-ci est dans une position rétractée. Dans cette position, la pince de verrouillage peut être engagée sans vissage à l'intérieur de la cavité 14 de l'embout 12. L'élément avant 26 du corps 18 abrite un manchon d'accostage 62 sollicité vers l'extérieur par un ressort 64. Ce manchon d'accostage se rétracte automatiquement dans l'élément avant 26 lorsque l'utilisateur engage le dispositif de raccordement 11 sur l'embout 12. De cette façon, la tête de raccordement 50 et la pince de verrouillage 28 restent protégées en toute circonstance.

Comme le montre la figure 2, le raccordement se traduit par un déplacement vers l'extérieur du tube de raccordement 20 qui a pour conséquence d'extraire les dents 59 de la gorge 60, celle-ci comportant un flanc conique. Il en résulte une expansion radiale de la pince de verrouillage 28, dans son ensemble, et un engagement des portions filetées de celle-ci avec le filetage intérieur 16 de l'embout 12.

Selon une caractéristique remarquable de l'invention, le manchon de commande 19 est élastiquement sollicité axialement en sens opposé dudit tube de raccordement 20 par un second moyen élastique 68, en l'occurrence ici un ressort hélicoïdal, développant une force supérieure à celle du premier moyen élastique et il comporte en outre une butée de retenue 78 coopérant avec un épaulement extérieur 79 du tube de raccordement pour s'opposer à son déplacement vers l'extérieur dudit corps tandis qu'une chambre de pression annulaire 80 en communication avec l'élément de conduit 54 est défini entre le palier fixe 34 et le manchon de commande 19 et comporte un épaulement (appartenant au manchon) sur lequel la pression du gaz est susceptible de s'exercer pour solliciter le manchon 19 à l'encontre dudit second moyen élastique 68.

Plus précisément, ladite chambre de pression 80 est définie entre deux portions cylindriques de diamètres extérieurs différents dudit palier fixe et deux portions cylindriques respectives, de diamètres intérieurs différents dudit manchon correspondant à ceux du palier et un perçage 81 s'étend dans ledit palier fixe depuis l'élément de conduit 54 jusqu'à un orifice situé au voisinage immédiat de l'épaulement séparant les deux portions de diamètres extérieurs différents du palier fixe.

Par ailleurs, le ressort hélicoïdal 68 constituant ledit second moyen élastique est intercalé entre une butée annulaire 82 solidaire dudit palier fixe et un épaulement intérieur 83 du manchon de commande. La butée de retenue 78 est, quant à elle, constituée par une rondelle montée à l'intérieur dudit manchon, retenue dans celui-ci par un circlip ou analogue et coulissant sur une portion extérieure de petit diamètre du tube de raccordement prolongeant la partie cylindrique 46. Par conséquent, cette butée est susceptible de coopérer avec l'épaulement 79 défini entre deux portions de diamètres différents dudit tube de raccordement 20.

Le fonctionnement du dispositif de raccordement rapide qui vient d'être décrit est le suivant:

Avant le raccordement, le dispositif 11 est dans la position illustrée à la figure 1, c'est-à-dire avec le levier de manoeuvre 22 basculé vers l'arrière par rapport à l'extrémité de branchement. Le manchon de manoeuvre 19 est sollicité vers l'arrière par le ressort 68 et son extrémité arrière s'applique contre les cames d'actionnement 43 liées au levier. Dans ces conditions, la butée de retenue 78 maintient la portion de plus grand diamètre 41 de la tige de raccordement à l'intérieur du palier fixe 34, en comprimant le ressort 49. Cette position est telle que la pince de verrouillage 28 se trouve rétractée radialement, les dents 59 de tous ses éléments 56 se trouvant engagés dans la gorge extérieure 60 du tube de raccordement.

Dans la situation illustrée à la figure 2, la tête de raccordement 50 et la pince 28 ont été engagées dans l'embout 12 et le levier de manoeuvre 22 a été basculé de façon à faire coulisser le manchon de commande vers l'avant en comprimant légèrement le ressort 68. Dans ces conditions, la butée de retenue 78 s'est déplacée également vers l'avant autorisant un déplacement axial de quelques millimètres dudit tube de raccordement 20, sous l'action du ressort 49. Les dents 59 des éléments de la pince se dégagent alors de la gorge (en glissant le long du flanc conique) ce qui provoque une expansion radiale de la pince dont les portions de filetage viennent en prise avec le filetage intérieur 16 de l'embout. Dans le même temps, la tête de raccordement 50 s'applique contre le siège conique de l'embout. Tant que le gaz sous pression n'est pas injecté dans le dispositif de raccordement, la manoeuvre décrite ci-dessus est réversible; il suffit de faire basculer le levier de manoeuvre 22 en sens inverse. En revanche, dès que le gaz sous pression est admis, l'application de la tête de raccordement 50 contre le siège se trouve confirmée par l'action de la pression sur l'extrémité arrière du tube de raccordement et, surtout, l'établissement de la pression du gaz dans la chambre de pression 80 confirme aussi la position du manchon de commande 19 (en butée à gauche en considérant la figure 2) à l'encontre de l'action du ressort 68. Par conséquent, même si on fait ensuite basculer le levier de manoeuvre dans la position illustrée à la figure 1, le manchon 19 reste dans la même position, confirmant le raccordement, tant que la pression de gaz n'a pas été ramenée à une valeur très faible, c'est-à-dire tant que l'alimentation d'oxygène sous pression n'a pas été interrompue. La valeur de seuil de pression pour laquelle le désaccouplement redevient possible est déterminée par la surface de l'épaulement du manchon dans la chambre de pression 80 d'une part et par la différence des forces exercées par les deux ressorts 49, 68, d'autre part.

Le dispositif décrit est un modèle spécialement adapté aux exigences d'exploitation en milieu médical. Dans ces conditions, il est nécessaire de neutraliser la valve formant clapet anti-retour (non représentée) située dans l'embout de la bouteille 12. Pour ce faire, l'élément de conduit axial 54 défini dans le tube de raccordement et le palier fixe abrite une tige d'actionnement 86 de valve susceptible d'être engagée dans l'embout 12, au-delà de la tête de raccordement 50, pour maintenir la valve en position ouverte. La tige d'actionnement 86 est liée au piston 87 du vérin 32 agencé à l'arrière dudit corps 18. Il s'agit d'un vérin pneumatique commandé par un automate. Le gaz d'actionnement, injecté par un orifice spécial 88, est par exemple de l'azote. Le piston se déplace dans un alésage 89 entre une paroi 90 du corps et une pièce de fermeture 91 par laquelle est injecté l'azote. Un orifice d'évent 92 est pratiqué au travers du corps et débouche au voisinage de la paroi 90.

Bien entendu, on peut concevoir un modèle plus simple, pour d'autres usages, dépourvu de tige d'actionnement et de vérin mais comportant les moyens essentiels de l'invention telle que définie ci-dessus.

Le mode de réalisation de la figure 3 montre une variante concernant essentiellement la structure de la pince de verrouillage 28a. Les autres éléments constitutifs de ce dispositif de raccordement lla ne comportant pas de modifications essentielles, portent les mêmes références numériques et ne seront pas décrits à nouveau.

Dans ce mode de réalisation, la pince de verrouillage 28a est constituée de plusieurs éléments 56a répartis circonférentiellement et articulés au corps pour pivoter sensiblement radialement autour de l'extrémité extérieure du tube de raccordement 20 en prenant appui pour leur basculement, sur un prolongement annulaire 96 de l'élément central 24 dudit corps 18.

Dans ce mode de réalisation, le second élément du corps est remplacé par un manchon extérieur coulissant 98, solidaire en translation du manchon de commande 19. Un anneau élastique 57a passé autour de l'ensemble des éléments 56a de la pince sollicite celle-ci à l'ouverture, comme représenté sur la figure 3. Chaque élément 56a de la pince comporte une portion de filetage intérieur 58a et une dent extérieure 59a et la sollicitation élastique créée par l'anneau 57a est telle que les dents extérieures sont en contact avec une portion d'extrémité du manchon coulissant 98.

Bien entendu, cet agencement de pince de verrouillage est conçu pour un raccordement à un embout 12a dont l'élément d'ancrage coaxial est constitué par un filetage extérieur 16a. Lorsqu'on introduit le tube de raccordement dans l'embout, les éléments 56a de la pince viennent entourer le filetage extérieur 16a de celui-ci. L'actionnement du levier de manoeuvre 22 fait coulisser le manchon vers l'avant et met en prise les portions de filetage 58a des éléments de la pince avec le filetage extérieur 16a de l'embout. Pour le reste, la structure et la mise en oeuvre de ce mode de réalisation sont inchangés.

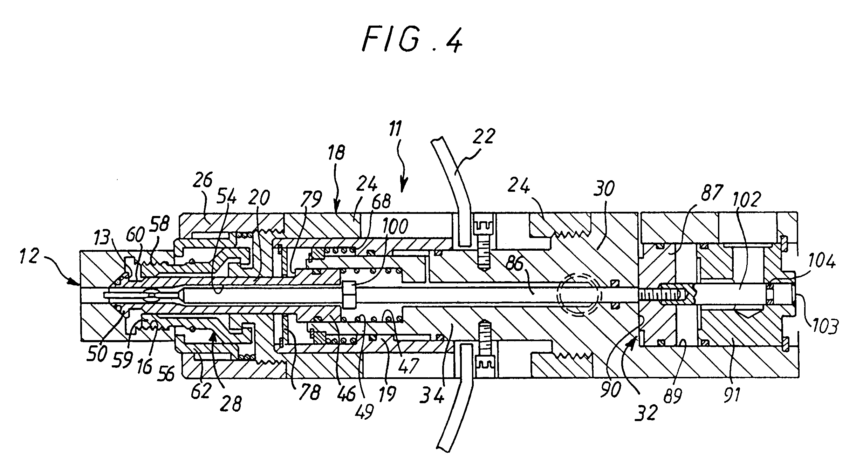

Sur la figure 4, on a représenté une variante du dispositif de raccordement des figures 1 et 2, présentant un perfectionnement facilitant le raccordement. Les éléments semblables à ceux du mode de réalisation des figures 1 et 2 portent les mêmes références numériques et ne seront pas décrits à nouveau.

Une première modification consiste en une butée 100 solidaire de la tige d'actionnement 86, située à l'intérieur de la partie élargie 47 du perçage axial pratiqué dans le palier fixe 34 et coopérant avec l'extrémité arrière du tube de raccordement 20. La butée 100 est conformée pour ne pas obturer le passage annulaire défini entre le conduit axial 54 et la tige d'actionnement 86. Elle peut par exemple avoir la forme d'une croix.

Une seconde modification consiste à prolonger la tige d'actionnement 86 vers l'arrière, par un élément cylindrique 102, fixé axialement au piston 87, s'étendant dans l'alésage 89 (abritant ledit piston) et dans un perçage axial de la pièce de fermeture 91, de façon que son extrémité 103 soit visible à l'arrière du dispositif de raccordement. Plus précisément, l'extrémité 103 affleure à l'arrière du dispositif de raccordement, comme représenté, lorsque toutes les portions de filetage extérieur 58 de ladite pince de verrouillage 28 sont complètement et convenablement en prise avec le filetage intérieur 16. Au contraire, lorsque ladite pince de verrouillage est rétractée ou n'est pas convenablement en prise avec le filetage intérieur 16, l'extrémité 103 de l'élément cylindrique 102 fait saillie à l'arrière du dispositif, donnant à l'utilisateur une indication visuelle de la situation. Un joint torique 104 est placé dans une gorge de l'élément cylindrique 102 ; il est en contact avec la pièce de fermeture 91 dans le perçage axial de celle-ci et assure l'étanchéité de la chambre du vérin 32. La présence de la butée 100 permet d'établir avec certitude la position du tube de raccordement par rapport à la tige d'actionnement. De plus, l'action du gaz moteur du vérin 32 confirme efficacement la bonne mise en place des éléments de la pince de verrouillage 28, qui ne dépend plus entièrement de l'action du ressort 49.

Bien entendu, le perfectionnement illustré à la figure 4 est transposable au mode de réalisation de la figure 3.

## Revendications

1. Dispositif de raccordement fluidique rapide destiné à être accouplé à un embout (12) comprenant un orifice (13) formant siège et un élément d'ancrage (16) coaxial, par exemple un filetage, du type comportant un corps à l'intérieur duquel est ménagé, selon un axe, un palier tubulaire fixe (34), un manchon de commande (19) coulissant extérieurement sur ce palier à l'intérieur dudit corps, un levier de manoeuvre (22) articulé audit corps et couplé audit manchon pour le déplacer axialement vers l'embout, un tube de raccordement (20) monté coulissant axialement de façon étanche dans une portion d'extrémité dudit palier, faisant saillie axialement dudit corps et terminé par une tête de raccordement (50) conformée pour s'appliquer de façon étanche sur ledit siège, ledit tube et ledit palier tubulaire définissant un élément de conduit axial (54) pour un fluide sous pression, une pince de verrouillage (28) à structure coaxiale conformée pour coopérer avec un élément d'ancrage précité et un premier moyen élastique (49) sollicitant ledit tube axialement vers l'extérieur dudit corps, caractérisé en ce que ledit manchon (19) est élastiquement sollicité axialement en sens opposé dudit tube par un second moyen élastique (68) développant une force supérieure à celle dudit premier moyen élastique, en ce qu'il comporte en outre une butée de retenue (78) coopérant avec un épaulement extérieur dudit tube de raccordement pour s'opposer à son déplacement vers l'extérieur dudit corps et en ce qu'une chambre de pression annulaire (80), en communication avec ledit élément de conduit (54), est définie entre ledit palier fixe et ledit manchon et comporte un épaulement sur lequel la pression dudit fluide est susceptible de s'exercer pour solliciter ledit manchon (19) à l'encontre dudit second moyen élastique (68).

2. Dispositif selon la revendication 1, caractérisé en ce que ladite chambre de pression (80) est définie entre deux portions cylindriques de diamètres extérieurs différents dudit palier fixe (34) et deux portions cylindriques respectives de diamètres intérieurs différents correspondants dudit manchon (19) et en ce qu'un perçage (81) s'étend dans ledit palier fixe depuis un alésage axial de celui-ci faisant partie de l'élément de conduit précité jusqu'à un orifice situé au voisinage de l'épaulement séparant lesdites deux portions de diamètres extérieurs différents dudit palier fixe.

3. Dispositif selon la revendication 1 ou 2, caractérisé en ce que ledit second moyen élastique est un ressort hélicoïdal (68) intercalé entre une butée (82) solidaire dudit palier fixe et un épaulement intérieur dudit manchon de commande (19).

4. Dispositif selon l'une des revendications précédentes, caractérisé en ce que ladite butée de retenue (78) est constituée par une rondelle montée à l'intérieur dudit manchon, retenue dans celui-ci par un circlip ou analogue et coulissant sur une portion extérieure de petit diamètre dudit tube de raccordement (46).

5. Dispositif selon l'une des revendications précédentes, caractérisé en ce que ledit élément de conduit axial (54) défini dans ledit tube de raccordement et ledit palier fixe, abrite une tige d'actionnement (86) de valve.

6. Dispositif de raccordement selon la revendication 5, caractérisé en ce qu'une extrémité de ladite tige d'actionnement est liée au piston (87) d'un vérin de commande (32) agencé dans ledit corps.

7. Dispositif de raccordement fluidique selon l'une des revendications précédentes, pour le raccordement à un embout (12) muni d'un filetage intérieur (16), caractérisé en ce que ladite pince de verrouillage (28) est constituée de plusieurs éléments (56) répartis circonférentiellement et articulés audit corps pour pivoter sensiblement radialement autour de l'extrémité extérieure dudit tube de raccordement (20), en ce que chaque élément comporte une portion de filetage extérieur (58) et une dent intérieure (59) en contact avec la paroi extérieure dudit tube de raccordement et en ce que ces dents sont susceptibles de s'engager ensemble dans une gorge (60) dudit tube de raccordement pour une position rétractée de celui-ci.

8. Dispositif de raccordement selon l'une des revendications 1 à 6, pour le raccordement à un embout (12a) muni d'un filetage extérieur (16a), caractérisé en ce que ladite pince de verrouillage est constituée de plusieurs éléments (56a) répartis circonférentiellement et articulés audit corps pour pivoter sensiblement radialement autour de l'extrémité extérieure dudit tube de raccordement (20), en ce que chaque élément comporte une portion de filetage intérieur (58a) et une dent extérieure (59a) et en ce que lesdits éléments sont sollicités élastiquement ensemble de façon que lesdites dents extérieures soient en contact avec une portion d'extrémité d'un manchon extérieur (98) solidaire en translation dudit manchon de commande (19).

9. Dispositif de raccordement selon l'une des revendications 5 ou 6, caractérisé en ce qu'une butée 100 est solidaire de ladite tige d'actionnement 86 et coopère avec ledit tube de raccordement 20.

10. Dispositif de raccordement selon l'une des revendications 5, 6 ou 9, caractérisé en ce que ladite tige d'actionnement 86 est prolongée vers l'arrière par un élément 102 agencé de façon que son extrémité soit visible.
